# EUROPEAN PATENT APPLICATION

(11) **EP 4 307 193 A1**
(43) Date of publication of application: **17.01.2024**
(21) Application number: 22184440.0
(22) Date of filing: 12.07.2022
(51) Int. Cl.: G06Q 10/08, G01N 35/04

(54) **METHOD OF OPERATING A LABORATORY SAMPLE DISTRIBUTION SYSTEM, LABORATORY SAMPLE DISTRIBUTION SYSTEM, AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: JANNER, Gabriele Piero, 68305 Mannheim (DE); OOSTERBROEK, Edwin, 6343 Rotkreuz (CH)
(74) Representative: Bittner, Thomas L.

(57) **Abstract**

The disclosure refers to a method of operating a laboratory sample distribution system having a plurality of carriers (4) configured to carry one or more sample containers containing a sample to be analyzed by laboratory devices (3); a transport plane (1) assigned to the laboratory devices (3) and providing support to the plurality of carriers (4); and a driving device (13) configured to move, in response to driving control signals, the plurality of carriers (4) between plane positions (5) provided on the transport plane (1). The method comprises: prior to moving the carriers (4) on the transport plane (1), pre-determining off-line routes (6) on the transport plane (1) by one or more processors of a data processing device, the pre-determining comprising: determining a model representing the transport plane (1) with plane locations (5') and location-to-location movements between plane locations (5') associated to the plurality of carriers (4) calculating an optimized set of off-line routes between pairs of plane locations from the plurality of plane locations (5') using the model, the calculating comprising solving an optimization problem in which routes between the pairs of plane locations are simultaneously optimized; and providing the optimized set of off-line routes as off-line routes (6) on the transport plane (1); and controlling the driving device (13) such that the carriers (4) are moved along the pre-determined off-line routes (6) on the transport plane (1). Furthermore, a laboratory sample distribution system, and a laboratory automation system are provided.

## Description

The present disclosure refers to a method of operating a laboratory sample distribution system. Further, the present disclosure refers to a laboratory sample distribution system. In addition, it is referred to a laboratory automation system.

### Background

Laboratory automation systems are applied, in particular, for determining samples, for example samples of a bodily fluid, essentially automatically. The sample is typically received in a sample vessel or container which is processed via a laboratory automation system.

Such laboratory automation systems can comprise a plurality of units. A laboratory automation system usually comprises a plurality of laboratory stations or devices such as, for example, a pre-analytical, an analytical and / or a post-analytical station or device. Typically, the containers are transported between different stations of the system via a sample distribution or transportation system. The sample vessel carriers with or without samples may be moved along a line for processing the samples, wherein the sample vessel carriers are moved by means of a transport device having one or more actuators and actuator drivers or driving devices for driving the carriers. For example, the sample vessels may be moved or relocated from a first working station to a second working station provided in the line of processing in the system. The working stations or devices may also be referred to as working locations.

At present, only transport systems inside the laboratories are fully automated. The designs for those transport systems, however, are mostly rather simple, comprising conveyor systems, wherein samples and sample containers / carriers, respectively, are moved along fixed routes. Usually, a set of routes along different analyzers / laboratory stations is defined via the hardware design (placement of rails / tracks) and / or electronics (dip switch configurations, preprogrammed turn-table logic, etc.) (e.g., a belt-drive transport system). Hence, a specific sample / container / carrier can be assigned to a specific fixed route. The specific sample / container / carrier can be transported along this specific fixed route, can "*step off*" the route in proximity to a specific analyzer to be processed by the analyzer, and can "*step on*" the route again to be further transported along the specific fixed route until the end of the route is reached. The sample can then be, e.g., stored or wasted. Typically, these routes are designed in a manual process by "*brain power*", i.e., for a specific order situation, for example the laboratory designer defines the routes such that a reference set of orders is processed efficiently and predefined requirements are met.

For complex transport systems, however, such a design may reach its limits.

Document WO 2016 / 188 752 A1 discloses a laboratory automation system, which comprises: a number of laboratory stations, and a number of sample container carriers (e.g. 10 to 10000), wherein the sample container carriers are adapted to carry one or more sample containers. The sample containers comprise samples to be processed by means of the laboratory stations. A transport plane is provided, wherein the transport plane is adapted to support the sample container carriers. The transport plane comprises a number of transfer areas, wherein a transfer area of the number of transfer areas is assigned to a corresponding laboratory station of the number of laboratory stations. Samples are transferred to the laboratory stations by moving the corresponding sample container carrier to the assigned transfer area. Drive means are provided, wherein the drive means are adapted to move the sample container carriers on the transport plane simultaneously and independently from one another along individual transport paths.

More complex transport systems may require a more sophisticated operation method, especially to better harness their potential.

Document EP 3 095 739 A1 discloses a method of operating a laboratory sample distribution system comprising a number of sample container carriers adapted to carry one or more sample containers, wherein the sample containers comprise samples to be analyzed by means of a number of laboratory stations. A transport plane is provided, wherein the transport plane is adapted to support the sample container carriers. The transport plane comprises a number of transfer locations assigned to corresponding laboratory stations. Drive means are provided adapted to move the sample container carriers on the transport plane. The method comprises steps of, during an initialization of the laboratory sample distribution system, pre-calculating routes depending on the transfer locations, and after the initialization of the laboratory sample distribution system, controlling the drive means such that the sample container carriers move along the pre-calculated routes. During the initialization (start, booting) of the laboratory sample distribution system fixed routes extending over the transport plane are pre-calculated depending on (between) the different transfer locations. The pre-calculated routes are provided on the transport plane between the transfer locations. The transfer locations represent initial or goal nodes in the sense of Graph theory. The routes are calculated using an informed search algorithm, i.e. an A*-algorithm or a D*-algorithm. The A*-algorithm is an algorithm that is used in path finding and graph traversal, to efficiently calculate a traversable path between different nodes, e.g. in the form of the transfer locations.

Document EP 3 410 123 A1 refers to a method of operating a laboratory sample distribution system, wherein the laboratory sample distribution system comprises a number of sample container carriers, wherein each of the sample container carriers comprises at least one magnetically active device and wherein each of the sample container carriers is adapted to carry at least one sample container, and a number of interconnected transport plane modules, wherein each of the transport plane modules is adapted to support a number of said sample container carriers. A number of electro-magnetic actuators is provided, wherein below each transport plane module a number of said electro-magnetic actuators is stationary arranged in rows and columns. The electro-magnetic actuators are adapted to move a sample container carrier of said sample container carriers on top of said transport plane modules along a row of said rows or along a column of said columns by applying a magnetic move force to said sample container carrier. The method comprises the steps as follows: a) assigning at least one transport plane module of said transport plane modules to a route category, wherein at least two traffic lanes are formed on the route categorized transport plane module, wherein said sample container carriers are moved within each traffic lane in a given transport direction, wherein the transport directions of the at least two traffic lanes are opposite to each other and wherein a change from one transport direction to the opposite transport direction is not possible for said sample container carriers moved on the route categorized transport plane module, and b) assigning at least one another transport plane module of said transport plane modules to a waypoint category, wherein a change from one transport direction to the opposite transport direction is enabled for said sample container carriers moved on the waypoint categorized transport plane module.

Document US 9 835 637 B2 relates in general to an automation system for use in a laboratory environment and, more particularly, to systems and methods for scheduling samples within the automation system by providing queuing logic.

An analysis system for analyzing biological samples is disclosed in document US 2019 / 0 120 866 A1.

Document US 10 668 622 B2 refers in general to an automation system for use in a laboratory environment and, more particularly, to systems and methods for use in a clinical analyzer.

In document US 9 315 334 B2, an automation system for an in vitro diagnostics environment is disclosed. The system includes a plurality of intelligent carriers that include onboard processing and navigation capabilities. The carriers control local motion and navigate at decision points, such as forks in the track, to reach the appropriate testing station independently.

With complex transport systems, route calculation for the carriers also becomes more complex. The size of the possible route sets grows exponentially both in the number of carriers and in the number of transportation fields of the transport plane / transport plane modules. Even for a single carrier, there is a huge number of routes connecting its current position to the targeted destination. However, in typical use cases (with a large number of transportation fields and carriers), the optimal routing should consider simultaneously routes for hundreds of carriers.

### Summary

It is an object to provide an improved method of operating a laboratory sample distribution system and a laboratory sample distribution system. In particular, it is an object to provide technology for improved determining of routes for carriers for laboratory sample distribution systems.

For solving the problem, a method of operating a laboratory sample distribution system according to the independent claim 1 is provided. Further, a laboratory sample distribution system according to the independent claim 16 is provided. Moreover, a laboratory automation system according to claim 17 is provided. Further embodiments are disclosed in dependent claims.

According to one aspect, a method of operating a laboratory sample distribution system is provided. The laboratory sample distribution system comprises a plurality of carriers configured to carry one or more sample containers containing a sample to be analyzed by laboratory devices, a transport plane assigned to the laboratory devices and providing support to the plurality of carriers, and a driving device configured to move, in response to driving control signals, the plurality of carriers between plane positions provided on the transport plane. The method comprises, prior to moving the carriers on the transport plane, pre-determining off-line routes on the transport plane (depending on transfer locations) by one or more processors of a data processing device. The pre-determining comprises steps of: determining a model representing the transport plane with plane locations and location-to-location movements between plane locations associated to the plurality of carriers, calculating an optimized set (a plurality) of off-line routes between pairs of plane locations from the plurality of plane locations using the model, the calculating comprising solving an optimization problem in which routes between the pairs of plane locations are simultaneously optimized, and providing the optimized set of off-line routes as off-line routes on the transport plane, e.g., to the driving device. The driving device is controlled such that the carriers are moved along the pre-determined set of off-line routes on the transport plane.

According to another aspect, a laboratory sample distribution system is provided. The laboratory sample distribution system comprises a plurality of carriers configured to carry one or more sample containers containing a sample to be analyzed by laboratory stations; a transport plane assigned to the laboratory devices and providing support to the plurality of carriers; and a driving device configured to move, in response to driving control signals, the plurality of carriers between plane positions provided on the transport plane. The laboratory sample distribution system is configured to: prior to moving the carriers on the transport plane, pre-determine off-line routes on the transport plane (depending on transfer locations) by one or more processors of a data processing device. The pre-determining comprises: determining a model representing the transport plane with plane locations and location-to-location movements between plane locations associated to the plurality of carriers, calculating an optimized set (a plurality) of off-line routes between pairs of plane locations from the plurality of plane locations using the model, the calculating comprising solving an optimization problem in which routes between the pairs of plane locations are simultaneously mutually optimized, and providing the optimized set of off-line routes as off-line routes on the transport plane. The laboratory sample distribution system is further configured to control the driving device such that the carriers are moved along the pre-determined optimized set of off-line routes on the transport plane.

According to still another aspect, a laboratory automation system is provided, the system comprising the laboratory sample distribution system according to the aforementioned aspect and a plurality of laboratory devices.

The pre-determined off-line routes may correspond to at least one of routes that may be determined at the moment when the configuration (laboratory sample distribution system) is designed; routes that are determined when the system is turned on; routes that are determined manually, e.g., triggered by the operator; and routes that are determined triggered by the system itself (e.g., when the traffic / order / state of instruments or part of the transport surface changes). In particular, the pre-determined routes may correspond to routes that are not calculated for each individual carrier but are fixed for a certain (period of) time.

The wording "off-line" as used refers to offline-computed routes. Off-line routes may be routes that are not computed in real-time for each movement while the laboratory sample distribution system is operated, but, e.g., during designing the lab or at the beginning of a working day prior to actually running or operating the laboratory sample distribution system (runtime).

The calculating of the optimized set of off-line routes between pairs of plane locations from the plurality of plane locations may further comprise: determining a plurality of off-line routes between pairs of plane locations from the plurality of plane locations (e.g., in the directed graph model), and determining an optimized set of off-line routes from the plurality of routes, comprising solving an optimization problem (e.g., a mixed-integer optimization problem) for the plurality of off-line routes.

The model can be a directed graph model of the transport plane, wherein nodes of the directed graph model are assigned plane locations and arcs connecting the nodes of the directed graph model are assigned (feasible) location-to-location movements between two plane locations. Alternatively, the model can be a model from the graph theory, a numerical (statistical) model and / or a model used in a simulation. However, the model can also be another model, e.g. a combination of aforementioned models.

A plane location can comprise one or more (a group of) plane positions. Each plane position (of the transport plane) can correspond to a certain area / logical field on the transport plane. The transport plane can be segmented into several logical fields, e.g. square shaped logical fields of identical size and outline. The logical fields may form a regular grid, wherein each cell of the grid may correspond to a logical field, each cell of the grid may be a square of identical size (identical in X- and Y-direction), and / or the grid may (exactly) cover the transport plane. A / each transport module (TM) may comprise one or more logical fields (e.g., a subset of the logical fields forming the transport plane). A set of transport modules may form the transport plane. Pitches between adjacent transport modules (TMs) may form pitches in the regular grid. For example, 10 to 10000 plane positions may be provided. Each plane position / logical field can correspond to a transport module, the plurality of transport modules together making up the transport plane. A node of the directed graph model may be assigned one or more (a group of) logical fields / plane positions. Arcs connecting the nodes of the directed graph model may be assigned location-to-location movements between two groups of logical fields / plane positions, wherein each group may comprise one or more logical fields / plane positions.

The optimized set of off-line routes provides for pre-determined off-line routes on the transport plane. Merely location-to-location movements between two neighboring plane locations may be allowed in an embodiment. Merely location-to-location movements between two neighboring groups of logical fields / plane positions may be allowed. The arcs may merely connect neighboring nodes of the directed graph model.

The plurality of off-line routes between pairs of plane locations from the plurality of plane locations in the directed graph model can be selected to form a plurality of possible routes connecting the pairs of plane locations. The possible routes can be located (directly) on the transport plane, preferably can be entirely located (directly) on the transport plane. Each pair of plane locations may be indicative of a pair of a start location / node and a destination location / node of one of the routes. Start and destination location of a certain route may constitute endpoint locations of this route. The pairs of plane locations may correspond to pairs of transfer locations.

The pairs of plane locations may correspond to most frequent start and destination locations (endpoint locations) of the carriers.

The pairs of transfer locations and / or the pairs of plane locations may represent corresponding pairs of a start node and a destination node of the routes in the sense of graph theory. The routes can be pre-determined between the transfer locations, i.e. the end points or end nodes of the routes are formed by the transfer locations. If, for example, a first, a second, and a third (most frequent) endpoint location of the carriers are given, two routes between the first and the second (most frequent) endpoint location (in one and the other direction), two routes between the first and the third (most frequent) endpoint location (in one and the other direction), and two routes between the second and the third (most frequent) endpoint location (in one and the other direction) can be pre-determined.

For example, 10 to 10 000 sample container carriers may be provided. The laboratory sample distribution system may process 2 000 to 200 000 samples per day. For example, 2 to 50 of laboratory stations may be provided. The transport plane may be planar, completely or at least in part.

A first and a second (sub-)transport plane may be provided, wherein the first and second transport plane may be provided at different levels. The carriers may be transported from the first to the second transport plane (and vice versa) via a lift (e.g., a paternoster lift) and / or ramps. The transport plane may comprise the first and the second (sub-)transport plane and optionally further (sub-)transport planes. Accordingly, the method for determining the off-line routes can also comprise routes that extend over both the first and the second and optionally further transport planes, each of which is provided on different levels.

In this regard, a route connecting segment of a route that extends over multiple transport planes, each provided on different levels, may connect a route section on one of these planes, e.g., the first transport plane, with a route section on another of these planes, e.g., the second transport plane, wherein the route segment connecting route sections on the different levels will be part of the route. This route-connecting segment may be comprised by a transport system such as the ramp or the lift.

In the present application, in general, the term "transport plane" refers to a two-dimensional and / or a three-dimensional surface, i.e., both a planar plane and / or a surface that extends not only in two spatial dimensions but also in a third spatial dimension. Such a three-dimensional surface in the sense of this application can be, for example, a surface with one or more curvatures, a ramp and / or lift between (sub-)planes.

The (sample container) carriers can be placed on top of the transport plane. The carriers can be moved on top of and over the transport plane. The transport plane may comprise 2 to 100 transfer locations. The transfer locations may be assigned to corresponding laboratory stations or devices. In addition or alternatively, the transfer locations may be assigned to areas, managed by a separate routing system. For instance, queue areas may be controlled by a separate routing system. Also, there may be two or more separately controlled transport systems which need a handover, i.e., a transfer mechanism, between these areas. For example, each laboratory station or devices may have a single corresponding transfer location configured to transfer a sample carrier and / or a sample from the transport plane to the laboratory device or back. Alternatively, more than one transfer location may be assigned to a corresponding laboratory station or device, in particular an output transfer location and an input transfer location. The transfer locations may be statically or dynamically assigned to the laboratory stations. In other words, during operation / at run-time, the transfer locations may be changed, if necessary.

The optimization problem, which may be model-related, can be one of the following: a multi-commodity flow problem, in particular a multi-commodity flow problem in a directed graph, a shortest path problem, and a minimum flow problem.

The calculation of the optimized set of off-line routes between pairs of plane locations from the plurality of plane locations can comprise, for example, finding an optimal multi-commodity flow in the directed graph. The multi-commodity flow problem is a network flow problem with multiple commodities (flow demands) between different source and sink nodes. The endpoint locations / pairs of locations can define the source and sink nodes.

The optimization problem may be solved, for example, by applying a MIP-solver (Mixed-Integer-Programming-solver). A generic solver for MIP problems can be used. The MIP-solver can be one of the following: Gurobi, IBM ILOG Cplex, and Coin-OR CBC, i.e. solutions for the mixed-integer optimization problem can be found with software products like Gurobi, IBM ILOG Cplex, and Coin-OR CBC. There are additional solvers known as such that are capable of solving this kind of optimization problem. In general, mixed-integer optimization problems deal with mathematical optimization problems with two types of variables: variables taking values in an integer domain, and variables taking values in a continuous domain.

First, an optimization problem may be defined, e.g. a multi-commodity flow problem, i.e. the problem of interest is modeled. The problem of interest may be to find a set of routes on a transport plane that is optimal with respect to one or more given criteria (constraints). Then, a solution approach, e.g. a MIP-solver, for the defined optimization problem may be selected to solve the optimization problem.

Examples of possible solution approaches are presented in paper P. FESTA, "A brief introduction to exact, approximation, and heuristic algorithms for solving hard combinatorial optimization problems", 16th International Conference on Transparent Optical Networks (ICTON), 2014, pages 1 to 20, doi: 10.1109 / ICTON.2014.6876285. The optimization problem can be solved by an exact optimization method, an approximation of the original problem by a simpler one and solving the simpler problem, and / or heuristics and / or metaheuristics. The exact optimization method can be a (i) branch and bound method, (ii) a dynamic programming method, or (iii) a solver (also other exact optimization methods can be used). The solver may comprise multiple algorithms (not only exact ones). The exact optimization method can also comprise combinations of aforementioned methods. Solving the approximated simpler problem may comprise applying (i) one or more greedy algorithms, (ii) a local search, (iii) one or more relaxation-based algorithms, or (iv) one or more random algorithms (also other methods for solving the approximated simpler problem may be used). Solving the approximated simpler problem may also comprise combinations of aforementioned methods. Heuristics and / or metaheuristics may be (i) a simulated annealing, (ii) one or more evolutionary algorithms, (iii) a tabu search, or (iv) one or more Greedy Randomized Adaptive Search Procedures (GRASP). The heuristics and / or metaheuristics may also comprise combinations of aforementioned methods.

The method may further comprise determining a re-optimized set of off-line routes from the optimized set of off-line routes at a time of initializing the laboratory sample distribution system. The determining of the re-optimized set of off-line routes may depend on the expected carrier traffic on the transport plane. For example, the optimized set of off-line routes may comprise two sets of optimized routes, a first set for high traffic and second set for low traffic. If low traffic is expected, the second set of optimized routes is selected when determining the re-optimized set of off-line routes and vice versa. The optimized set of off-line routes may alternatively comprise several sets of optimized routes for several traffic scenarios. When determining the re-optimized set of offline routes, in this case, depending on the expected traffic, the corresponding set of optimized routes is selected from the several sets of optimized routes.

The (expected) carrier traffic (carrier traffic intensity) may depend on several factors. The throughputs can be higher at working days than in the weekend and can be higher between 8:00 and 18:00 than during the night. The types of ordered tests can be different at certain days or hours if, for example, glucose screening is carried out on a batch of samples or clinical studies are carried out. Thus, an endpoint (start point or destination point) assigned to a corresponding laboratory device may serve as an endpoint more frequently. The corresponding routes comprising this endpoint may have higher carrier traffic (carrier traffic intensity). Likewise, due to seasonal effects or pandemic situations, some tests are ordered much more frequently for a longer period of time.

The determined optimized set of off-line routes can be used as or represented by a lookup table. Each time a carrier needs to travel from a starting field to a destination, a corresponding route can be selected from the lookup table.

The method may further comprise, in the data processing device, (i) providing first frequent endpoint location data indicative of a first selection of plane locations most frequently providing for an endpoint of a route of traveling for the carriers, and (ii) determining the directed graph model of the transport plane, wherein first nodes of the directed graph model are assigned the plane locations from the first selection of plane locations and first arcs starting and / or ending at the first nodes of the directed graph model are assigned location-to-location movements from and / or to plane locations from the first selection of plane locations.

Alternatively or in addition, the method may comprise, in the data processing device, providing first frequent endpoint location data / data on first frequent pairs of endpoint locations indicative of a first selection of plane locations most frequently providing for an endpoint / a first selection of plane location pairs most frequently providing for a pair of endpoints (start and destination) of a route of traveling for the carriers. The first selection of plane location pairs may correspond to 5 to 10 pairs of endpoints, i.e. the first selection of plane location pairs may correspond to 5 to 10 routes of traveling for the carriers.

The pairs of plane locations from the plurality of plane locations can comprise the first selection of plane locations and / or the first selection of plane location pairs. In particular, the first selection of plane locations and / or the first selection of plane location pairs can define the pairs of plane locations from the plurality of plane locations. The first selection of plane locations and / or the first selection of plane location pairs can correspond to the transfer locations and / or pairs of the transfer locations (but is not limited thereto). However, the first selection of plane location pairs can correspond to all pairs of endpoints (start and destination) for travel routes for carriers.

Alternatively or in addition, the method may comprise, in the data processing device, providing data on first endpoint locations and / or first pairs of endpoint locations indicative of a first selection of plane locations and / or a first selection of plane location pairs located in a first area, corresponding to a first workflow, and / or corresponding to high-priority samples (time-critical tests).

One transfer location may correspond to one or more than one laboratory devices such as, for example, analyzers. For the one or more than one laboratory devices a plurality of plane locations (each) can define the one transfer location. A first plane location of the plurality of plane locations can define the one transfer location. Alternatively, a second plane location of the plurality of plane locations can define the one transfer location. Either the first or second plane location defining the one transfer location, can be swapped. In particular, whether the first or second plane location defines the one transfer location can be swapped during the pre-determining of off-line routes, in particular during calculating the optimized set of off-line routes. The laboratory devices can comprise an input (assigned to a first transfer location) for the carriers and an output (assigned to a second transfer location) for the carriers. In particular, the input and output can be swapped during the pre-determining of off-line routes, in particular during calculating the optimized set of off-line routes. In particular, the swapping can take place in one or more of the optimization steps. The swapping can take place if this has a performance advantage. Merely pairs of input and outputs may correspond to the pairs of plane locations. However, input and output can correspond to the same plane location.

The method may further comprise, in the data processing device, (i) providing second frequent endpoint location data indicative of a second selection of plane locations less frequently providing for an endpoint of a route of traveling for the carriers, wherein the second selection of plane locations is different from the first selection of plane locations; and (ii) determining the directed graph model of the transport plane, wherein second nodes of the directed graph model are assigned the plane locations from the second selection of plane locations and second arcs starting and / or ending at (connecting) the second nodes of the directed graph model are assigned location-to-location movements from and / or to plane locations from the second selection of plane locations.

Alternatively or in addition, the method may comprise, in the data processing device, providing second frequent endpoint location data / data on second frequent pairs of endpoint locations indicative of a second selection of plane locations less frequently providing for an endpoint / a second selection of plane location pairs less frequently providing for a pair of endpoints (start and destination) of a route of traveling for the carriers. The second selection of plane location pairs may correspond to 5 to 10 pairs of endpoints, i.e. the second selection of plane location pairs may correspond to 5 to 10 routes of traveling for the carriers. The second selection of plane locations may differ (completely / in pairs) from the first selection of plane locations. The second selection of plane location pairs may differ (completely / in pairs) from the first selection of plane location pairs.

The pairs of plane locations from the plurality of plane locations can comprise the second selection of plane locations and / or the second selection of plane location pairs. In particular, the second together with the first selection of plane locations and / or the second together with the first selection of plane location pairs can define the pairs of plane locations from the plurality of plane locations. The second selection of plane locations and / or the second selection of plane location pairs can correspond to non-transfer locations, i.e. the second selection of plane locations and / or the second selection of plane location pairs may not comprise transfer locations (but is not limited thereto).

Alternatively or in addition, the method may further comprise, in the data processing device, providing data on second endpoint locations and / or second pairs of endpoint locations indicative of a second selection of plane locations and / or a second selection of plane location pairs located in a second area, corresponding to a second workflow, and / or corresponding to samples with a lower priority.

The first selection of plane locations / plane location pairs may define a first set of pairs of plane locations. The second (and first) selection of plane locations / plane location pairs may define a second set of pairs of plane locations. The first and second set of pairs of plane locations may be comprised by (may define) the pairs of plane locations. The pre-determining of off-line routes may comprise a first pre-determining of off-line routes, wherein the first set of pairs of plane locations defines the pairs of plane locations for the first pre-determining, and a second pre-determining of off-line routes, wherein the second set of pairs of plane locations defines the pairs of plane locations for the second pre-determining. The first and second pre-determining of off-line routes may take place independently of each other. First and second (optimized) off-line routes may correspond to the first and second pre-determining of off-line routes. The first and second pre-determining of off-line routes may correspond to different or the same optimization problems. The first and second pre-determining of off-line routes may correspond to different or the same methods for solving the respective optimization problem. The pre-determining of off-line routes may comprise a third pre-determining of off-line routes. The third pre-determining of off-line routes may correspond to third (optimized) off-line routes. The third pre-determining of off-line routes may comprise calculating an optimized set of off-line routes between a third selection of plane locations / plane location pairs. Analogously, fourth, fifth and further optimized off-line routes can also be calculated in groups (5 to 10 routes and / or 5 to 10 plane location pairs). The second pre-determining of off-line routes may take place subsequent the first pre-determining of off-line routes. The second pre-determining of off-line routes may depend on the first (optimized) off-line routes determined via the first pre-determining of off-line routes. The expected traffic load from the first set of routes may be considered during the second optimization. During the second pre-determining of off-line routes, the first (optimized) off-line routes may be fixed. The first and second pre-determining of off-line routes may correspond to determining the plurality of off-line routes between pairs of plane locations from the plurality of plane locations in the directed graph model.

Optimizing off-line routes in several groups of routes can make it easier to find solutions. For example, the optimization problem may be simplified in this case. Also, time needed for conducting the optimization procedure may be reduced. The optimization process may focus on routes most intensively used first while having lower optimization demands to routes that are used less intensively.

It can also be foreseen to provide several routes for the same start-destination combination (alternative routes). This provides for the option to switch between alternative routes in case there is a problem in one of them, e.g., traffic jams (a carrier could get stuck on it). Additionally, with multiple routes (ideally using different logical positions), the traffic load per route can be reduced to increase the total throughput (more total capacity between the corresponding start-destination combination) or reduce the wear of the surface used for the routes as traffic is distributed over more transport surface.

A pair of the first set of pairs of plane locations may comprise two plane locations from the first selection of plane locations. A pair of the second set of pairs of plane locations may comprise two plane locations from the second selection of plane locations. However, additionally or alternatively, a pair of the second set of pairs of plane locations may comprise one plane location from the first selection of plane locations and one plane location from the second selection of plane locations.

The method may further comprise, in the data processing device, (i) providing traffic data indicative of a predicted number of carriers travelling between the pairs of plane locations in a time interval, and (ii) calculating the optimized set of off-line routes between pairs of plane locations from the plurality of plane locations in dependence on the predicted number of carriers travelling between the pairs of plane locations. In addition or alternatively, the traffic data may be indicative of an actual / recent number of carriers travelling between the pairs of plane locations in a time interval.

The providing traffic data may comprise at least one of providing traffic data determined from a sample order listing, providing traffic data determined from historical data indicative of historical operation of the laboratory sample distribution system, providing traffic data determined from workflow data indicative of a workflow for the one or more sample containers to be carried by the carriers, providing traffic data determined from a measured current and / or recent number of carriers transported, and providing traffic data determined from a simulation. The traffic data may correspond to empty as well as to filled (routed) carriers.

The controlling of the driving device may further comprise: (i) in the driving device, receiving a reservation request from a carrier traveling on a selected off-line route from the pre-determined off-line routes and being located on a present route location along the selected off-line route, the reservation request indicating a request for reserving a following route location (e.g., a logical field / plane position) along the selected off-line route, (ii) verifying whether the following route location is free for travelling by the driving device, and (iii) moving the carrier from the present route location to the following route location along the selected off-line route, if it is verified by the driving device that the following route location is free for travelling.

After verifying that the following route location is free for travelling and prior to moving the carrier, the following route location can be reserved for this carrier, i.e. the following route location can be blocked for other carriers. In particular, the following route location can be blocked for other carriers until the carrier in question has reached and subsequently left the following route location. The above may analogously apply for n following route locations. The n following route locations may correspond to a subset of locations (e.g., logical fields / plane positions) along the selected off-line route. In this case, the n following route locations can be unlocked for other carriers one after the other after they have been passed through by the carrier. Alternatively, the n following route locations may be unlocked for other carriers at once after they have all been passed through by the carrier.

The calculating of the optimized set of off-line routes between pairs of plane locations from the plurality of plane locations via solving the optimization problem may further comprise applying at least one constraint selected from the following group: (i) minimizing a route length of each of the off-line routes from the plurality of off-line routes; (ii) minimizing a weighted route length of each of the off-line routes; (iii) minimizing a number of route curves for each of the off-line routes from the plurality of off-line routes; (iv) minimizing a number of off-line routes joining and / or crossing another off-line route; (v) uniformly distributing carrier traffic per plane location; (vi) limiting location-to-location movements between two plane locations to movement between adjacent plane locations only; (vii) exclude plane locations reserved for carrier queuing; (viii) uniformly distributing predicted wear of plane locations over the plane locations of the transport plane; (ix) minimizing the energy consumption of the laboratory sample distribution system; and (x) minimizing / avoiding areas of 2x2 plane positions with four crossings. Areas of 2x2 plane positions that allow for a circular sequence of feasible field-to-field movements are minimized or avoided. An area of 2x2 plane positions with four crossings may be indicative of one potential deadlock situation. Analogously, further potential deadlock situations may be defined. An additional or alternative constraint may be the minimization or avoidance of one or more further potential deadlock situations.

With respect to minimizing the weighted route length, in the optimization proceedings, endpoint pairs may be assigned weightings, or optimal routes may be determined in a weighted graph.

Also, the constraints can have weightings. Routes with higher expected traffic may be higher weighted. The more highly weighted route may be prioritized over the less highly weighted route in minimizing the respective route length, number of route curves, and / or number of crossings and / or overlaps with other routes (etc., cf. above constraints). The first and second pre-determining of off-line routes may comprise applying different constraints.

In a typical scenario, for example, 5 to 10 routes between the pairs of plane locations may be simultaneously mutually optimized. Each route may refer to one pair of plane locations. The pairs of plane locations may be 5 to 10 pairs. Routes between the 5 to 10 pairs of plane locations may be simultaneously mutually optimized.

The constraints can have weightings. The weightings can be set empirically. The constraints can be hard (e.g., can have an "*infinite weight*") or soft (e.g., can have a finite weight). Constraints relating to routes with high traffic can have higher ratings than routes with lower traffic. According to one example, which refers to a route with low traffic intensity, the following weights are applied in the optimization: (i) route length: 5 penalty points per field (plane location or plane position) used in the route; (ii) route joining: 50 penalty points for route joining another one. According to another example, which refers to a route with higher traffic intensity, the following weights are applied in the optimization: (i) route length: 10 penalty points per field (plane location or plane position) used in the route; (ii) route joining: 100 penalty points for route joining another one.

The pre-determining of off-line routes may further comprise, in the data processing device, receiving first route traffic information indicative of high carrier traffic for a first off-line route, and splitting the at least one off-line route into two or more different off-line routes.

The determining of the plurality of off-line routes between pairs of plane locations from the plurality of plane locations in the directed graph model may further comprise, in the data processing device, receiving first route traffic information indicative of high carrier traffic for a first off-line route, and splitting the at least one off-line route into two or more different off-line routes.

The calculating of the optimized set of off-line routes between pairs of plane locations from the plurality of plane locations may further comprise, receiving first route traffic information indicative of high carrier traffic for a first off-line route, and splitting the at least one off-line route into two or more different off-line routes.

The first route traffic information may be derived by the traffic (intensity) data indicative of the predicted number of carriers travelling between the pairs of plane locations in a time interval. A (traffic-)threshold may be predefined. If the number of carriers travelling between the (corresponding) pair of plane locations in a time interval is greater than the threshold, the traffic intensity may be identified as high (high traffic intensity). If the number of carriers travelling between the (corresponding) pair of plane locations in a time interval is lower than the threshold, the traffic intensity may be identified as low (low traffic intensity).

Several (traffic-)thresholds of different sizes can be defined. The more (traffic-)thresholds are exceeded, the more often the at least one off-line route can be split. The at least one off-line route can be split into as many different off-line routes as thresholds have been exceeded. The (traffic-)threshold can be indicative of the maximum capacity of a route. In case of several thresholds, the first / smallest threshold may be indicative of the maximum capacity of a route and the subsequent threshold may be indicative of twice the maximum capacity of a route.

The different off-line routes may comprise a first and a second off-line route being different from each other. The first and second off-line routes may have overlapping-sections and spaced sections. For example, the spaced sections may comprise parallel sections. Carriers that originally followed the at least one off-line route prior to the splitting of this route may follow one of the two or more different off-line routes into which the at least one off-line route has been split. The carriers can be divided equally between the two or more different off-line routes. Thus, in case of two different off-line routes, 50 % of the carriers may follow the first of the two different off-line routes and 50 % of the carriers may follow the second of the two different off-line routes. Alternatively, the loads of the different off-line routes may be different. For example, the shortest of the different off-line routes may have the highest load. If one of the different off-line routes is the best with respect to the optimization (e.g., is the shortest and / or has the fewest crossings with other routes), this route can have the highest load of the different off-line routes. Alternatively, one route of the different off-line routes can be loaded with traffic until the (traffic-)threshold is reached and all traffic exceeding this threshold can be sent to a further route of the different off-line routes.

A traffic intensity matrix or list of two dimensions can be indicative of the (expected) traffic intensity for each pair of plane locations (start-point/ end-point combination) (cf. Table 1). Each pair of plane locations can correspond to a certain (needed) traffic intensity.

**Table 1: Example of traffic intensity matrix with start-points in the columns and end-points in the rows. Each table entry represents an expected traffic intensity for the corresponding pair of start-point and end-point.**

| Traffic intensity in carriers per minute | Plane location A as start-point | Plane location B as start-point | Plane location C as start-point |
|---|---|---|---|
| Plane location A as end-point | - | 2 | 4 |
| Plane location B as end-point | 1 | - | 3 |
| Plane location C as end-point | 2 | 6 | - |

The method may further comprise, in the data processing device, providing traffic intensity data indicative of a predicted number of carriers travelling between each of the pairs of plane locations in a time interval. The traffic intensity data may be comprised by the traffic data. The traffic intensity may comprise the traffic intensity matrix or the list of two dimensions.

The traffic data may be determined based on the traffic intensity data and / or the traffic intensity for each pair of plane locations. The traffic intensity data and / or the traffic intensity for each pair of plane locations may be calculated on a total accumulated traffic between each pair of plane locations, a peak traffic between each pair of plane locations, and / or capacities of the laboratory devices assigned to each pair of plane locations. For determining the total accumulated traffic, all moves between each pair of plane locations can be calculated, e.g. from order lists, e.g. for a specific time interval. For instance, the number of carriers being moved / estimated to be moved within 24 hours between each pair of plane locations can be indicative of the total accumulated traffic between each pair of plane locations. For determining the peak traffic, a time-window (e.g., a moving time window) or fixed time intervals of, e.g. 15 or 30 minutes over 24 hours, may be defined, in which the maximum traffic intensities can be identified for each pair of plane locations. The peak traffic can correspond to a global or a local peak traffic. The global peak traffic corresponds to the traffic intensities for each pair of plane locations when the traffic between all pairs of plane locations is maximum. The local peak traffic corresponds to the maximum traffic intensities for each pair of plane locations. The maximum traffic intensities for different pairs of plane locations can be present at different times. The capacities of the laboratory devices can be considered to avoid queues in the proximity of the laboratory devices. The sum of the traffic (intensities) (for each route) can correspond to the transport capacity of the system (for each route). The transport capacity can be matched (for each route) to the capacities of the laboratory devices (for each route).

The above (traffic-)threshold may be compared to traffic intensity data for each pair of plane locations to decide whether the traffic is high.

The first selection of plane locations may be indicative of frequent pairs of plane locations (endpoints of carrier routes). The second selection of plane locations may be indicative of less-frequent pairs of plane locations (endpoints of carrier routes). The first selection of plane locations may correspond to high entries in the traffic intensity matrix. The second selection of plane locations may correspond to lower entries in the traffic intensity matrix.

The pre-determining of off-line routes may comprise a first pre-determining of off-line routes, wherein the first selection of plane locations defines the pairs of plane locations, and a second pre-determining of off-line routes, wherein the second selection of plane locations de-fines the pairs of plane locations. The first pre-determining of off-line routes may be prioritized. The first pre-determining of off-line routes may take place prior to the second pre-determining of off-line routes. During the second pre-determining of off-line routes, the first pre-determined off-line routes may be fixed / "frozen". The first and second pre-determining of off-line routes may be provided analogously to the pre-determining of off-line routes.

In the optimization, the traffic intensities can be used to weight the importance of each of the pairs of plane locations. For instance, for a pair of plane locations with high traffic intensity, it is more important to reduce the number of bends or crossings of the corresponding route connecting the pair of plane locations than for pairs of plane locations with less traffic intensities.

The pre-determining of off-line routes may further comprise, in the data processing device, receiving second route traffic information indicative of high carrier traffic (intensity) for a second off-line route, and preventing the second off-line route from route adjustment while determining the plurality of off-line routes and / or determining (calculating) the optimized set of off-line routes. This step may alternatively or in addition be comprised by the step of calculating the optimized set of off-line routes.

The calculating of the optimized set of off-line routes between pairs of plane locations from the plurality of plane locations using the model (e.g., in the directed graph model) may further comprise, in the data processing device: receiving first carrier traffic information indicative of a first carrier traffic scenario for the plurality of off-line routes; determining a first plurality of off-line routes between the pairs of plane locations from the plurality of plane locations (e.g., in the directed graph model); receiving second carrier traffic information indicative of a second carrier traffic scenario for the plurality off-line routes, wherein the second carrier traffic scenario is different from the first carrier traffic scenario; and determining a second plurality of off-line routes between the pairs of plane locations from the plurality of plane locations (e.g., in the directed graph model). This step may alternatively or in addition be comprised by the pre-determining step.

The first plurality of off-line routes between the pairs of plane locations may comprise a first number of plane locations and / or plane positions (logical fields) comprised / traversed by the first plurality of off-line routes. The second plurality of off-line routes between the pairs of plane locations may comprise a second number of plane locations and / or plane positions (logical fields) comprised / traversed by the second plurality of off-line routes. The first and second number of plane locations and / or plane positions (logical fields) may be different. Each plane location and / or plane position (logical field) may correspond to a respective module of the transport plane. Modules corresponding to / comprising only plane locations and / or plane positions (logical fields) not comprised / traversed by the (first and / or second plurality of) off-line routes may be switched off.

The controlling of the driving device may further comprise operating the laboratory sample distribution system at run-time; and selecting an off-line route from the optimized set of off-line routes, if it is determined that a runtime route cannot be determined for a carrier at run-time. The controlling of the driving device may further comprise operating the laboratory sample distribution system at run-time; and selecting an off-line route from the lookup table. In this case, the off-line routes may serve as fallback routes.

At run-time, the routes for the carriers may (primarily) be selected from the set of off-line routes / lookup table. However, one or more than one (single) route can be re-optimized during run-time. The re-optimizing of the one or more than one (single) route during run-time may take place in reaction to a user input, an obtained error for this route, or changing corresponding endpoints. The re-optimizing of one or more (single) routes during run-time may depend on the current routes, e.g. the (pre-determined) set of off-line routes, and / or (un-)available plane location(s) (blocked plane location(s)). One or more (single) routes may be determined during run-time. At run time, off-line and run-time determined routes may be combined. Analogously, at run time, a part of a route can be re-optimized. The re-optimizing may take place in reaction of changes in the system (new laboratory devices, relocation of laboratory devices, reconstruction of the transport plane, new workflows, new order profiles, the corresponding route traverses a defective module of the transport plane, and / or new carriers).

Analogous to the pre-determining of off-line routes, off-line routes can be determined in a post-determining step during the movement of the carriers. The post-determination may take place off-line separately from the sample distribution system. The post-determination may depend on parameters provided by the sample distribution system and / or parameters provided by, for example, the user. The post-determination may take place in reaction of changes in the system (new laboratory devices, relocation of laboratory devices, reconstruction of the transport plane, new workflows, new order profiles, and / or new carriers). The off-line routes determined off-line via the post-determining may subsequently be loaded to the sample distribution system, i.e. the off-line routes determined off-line via the pre-determining may be replaced by the off-line routes determined off-line via the post-determining.

In the method, the pre-determining of off-line routes may further comprise: determining a first optimized set of off-line routes; assigning the first optimized set of off-line routes a first application parameter; determining a second optimized set of off-line routes which is different from the first optimized set of off-line routes; and assigning the second optimized set of off-line routes a second application parameter. Further, the controlling of the driving device may further comprise receiving application information indicative of a current application parameter, and selecting one of the first optimized set of off-line routes and the second optimized set of off-line routes for controlling the driving device, if it is determined that the current application parameter matches the first application parameter or the second application parameter. The first and second application parameter can be indicative of a first and a second date, time period, traffic situation (e.g. high or low traffic), operation mode, and / or orders.

The application parameters may correspond to a KPI (Key Performance Indicator) of the laboratory automation system. Examples for application parameters may be the traffic data, the constraints, the weightings of the constrains, etc., or combinations thereof.

With respect to the laboratory automation system, the plurality of laboratory devices (stations) may comprise one or more laboratory devices selected from the following: laboratory device for pre-analytics, laboratory device for sample analysis, and laboratory device for post-analytics. A pre-analytical station or device may be adapted to perform any kind of pre-processing of samples, sample containers and / or sample container carriers. Analytical stations may be adapted to use a sample or part of the sample and a reagent to generate a measuring signal, the measuring signal indicating if and in which concentration, if any, an analyte is existing. Post-analytical stations may be adapted to perform any kind of post-processing of samples, sample containers and / or sample container carriers.

Deadlocks may be prevented. A deadlock is a situation that prevents a set of carriers from making the next move because other carriers already occupy the fields and cannot move either. The smallest deadlock situation, if field-to-field (logical field / plane position) moves are possible for each field in only one X- and one Y-direction, comprises four carriers. In this case, the four carriers are located in an area of 2x2 fields. Each field is occupied by one carrier. At each field in the area of 2x2 fields, a clockwise or counterclockwise movement to the next field within the area of 2x2 field is allowed and intended. However, due to the occupation, such a movement is not possible as the possibility of each carrier's movement depends on the other carrier's possibility to move. Hence, a circular dependency of the carriers and their next movements exists. Bigger deadlock situations, caused by the same mechanism but involving more carriers, can exist as well.

The smallest deadlock situation, if field-to-field (logical field / plane position) moves are possible for each field in each horizontal direction, comprises two carriers. In this case, analogously to the 2x2 deadlock, the two carriers are located in an area of 2x1 (1x2) fields. The carriers involved in a larger deadlock might be placed on all the transport locations of a rectangular (n x m) region of the transport plane. Besides this situation, deadlocks may involve arbitrary closed sequences of plane locations each containing a carrier that cannot move due to a circular dependency. Deadlocks may even involve plane locations of different planes and ramps / lifts. The embodiments presented here analogously apply.

From each plane position / logical field, the carriers may generally be able to move in the two X- and the two Y-directions (left / right and up / down). Alternatively, the carriers may be restricted to move only in one X-direction and in one Y-direction from each plane position / logical field. However, the permitted directions of movement do not have to be the same for each plane position / logical field. For example, at a first plane position / logical field, the carriers can only move up and to the right, and at a second plane position / logical field, the carriers can only move down and to the left. The restriction may be provided to prevent 2x1 (1x2) deadlocks.

A specific pattern for allowed location-to-location movements on the transport plane may be generated, e.g. to avoid 2x2 deadlocks. At each plane position, the carriers may exclusively move in one X- and one Y-direction. The plane may be rectangular (or composed by rectangular components). The plane may be divided in quadratic areas of n x n plane positions (or in rectangular areas of n x m plane positions). Each area of n x n plane positions may correspond to one transport module. The carries may be allowed, in the upper part (half) of each of the quadratic areas, to move in a first X-direction and, in the lower part (half) of each of the quadratic areas of the transport plane, to move in a second X-direction being different from the first X-direction, i.e. the first and second X-directions lead in opposite directions. The carries may be allowed, in the left part (half) of each of the quadratic areas, to move in a first Y-direction and, in the right part (half) of each of the quadratic areas of the transport plane, to move in a second Y-direction being different from the first Y-direction, i.e. the first and second Y-directions lead in opposite directions. Each quadratic area may comprise one area of 2x2 plane positions in which a circular movement is allowed. In addition, areas of 2x2 plane positions comprised by four of such quadratic areas may allow circular movement. In these areas of 2x2 plane positions, four allowed movements may define the allowed circular movement (which allows a deadlock to be created in each of this areas of 2x2 plane positions). One of the four allowed movements can be removed (in order to prevent deadlock situations). Alternatively, more than one, preferably two, of the four allowed movements can be removed. Preferably, the one or more removed allowed movements are ones that would not be expected to be used frequently. In particular, the one or more removed allowed movements are ones that lie perpendicular to the main transportation flow.

There can be two ways to obtain routes where 2x2 deadlocks are avoided: (1) the allowed directions for determining routes are defined according to the above specific pattern and / or (2) when calculating the optimized set of off-line routes, the rule is added to avoid that any subset of field-to-field movements involved in the set of routes define an area of 2x2 plane locations in which a circular movement is allowed.

For all identified deadlocks, the sizes (number of positions that need to be occupied to form a deadlock) may be computed. Small deadlocks like 2x2 deadlocks may occur more often than larger deadlocks. Also, larger deadlocks may contain smaller deadlocks. Avoiding small and large deadlocks may comprise reducing the solution space for finding optimized routes. Eliminating the chance on creating small deadlocks may be prioritized. A deadlock size threshold may be provided. The calculating of the optimized set of off-line routes may avoid the creation of routes that may result into deadlocks with a size smaller or equal to the deadlock size threshold.

Deadlocks may be prevented by moving rules for the carriers. Each carrier may reserve a corresponding track segment. A first carrier may reserve a first track segment. The first track segment may comprise one or more subsequent plane positions on the route of the first carrier starting from the current plane position of the carrier. The positions of the reserved first track segment may be blocked for other carriers. The first plane position on the route of the first carrier subsequent the reserved first track segment may be flagged. The flagged plane position may not be blocked for other carriers. A second carrier may not reserve a second track segment that ends on the flagged plane position, i.e., the last plane position, starting from the current position of the second carrier, of the second track segment of the second carrier may not be the flagged plane position. Track segments may comprise a fixed number of plane positions, e.g. one, two, or more. Alternatively, different carriers may reserve track segments with a different number of plane positions.

The method may further comprise detecting a broken (and / or unavailable) plane location comprising at least one broken plane position, wherein the at least one broken plane position is comprised by at least one of the determined off-line routes and divides the at least one of the determined off-line routes in a first sub-route and in a second sub-route. In reaction to determining the broken plane location, an area comprising the at least one broken plane position, at least one working plane position corresponding to the first sub-route, and at least one working plane position corresponding to the second sub-route may be determined. The method may further comprise calculating an optimized connecting route between the at least one working plane position corresponding to the first sub-route and the at least one working plane position corresponding to the second sub-route, the calculating comprising solving an optimization problem in which the connecting route between the at least one working plane position corresponding to the first sub-route and the at least one working plane position corresponding to the second sub-route is optimized under exclusion of the at least one broken plane position. The optimization may consider the provided (existing) set of off-line routes. The first sub-route, the connecting route, and the second sub-route may replace the at least one of the determined off-line routes. The method may further comprise controlling the driving device such that the carriers are moved along the pre-determined off-line routes on the transport plane, wherein the at least one of the determined off-line routes is replaced by the first sub-route, the connecting route, and the second sub-route. The calculation of the connecting route can be done in semi-runtime. The system can be stopped once a broken (or unavailable) plane location is detected. After the calculation of the connecting route, the system can be started again.

To each of the determined off-line routes, a maximum expected load / a maximum expected number of carriers transported along (on) the route may be assigned. The method may comprise, during operation (in run-time), avoiding exceeding the maximum load / the maximum number of carriers for one of the determined off-line routes. For example, the method may comprise stopping to supply a route that has reached its maximum load / its maximum number of carriers with further carriers. When stopping to supply a route with further carriers, the further carriers (or respective samples / racks) intended to be carried along said route may be temporarily buffered on or near the corresponding laboratory device until the load / the number of carriers of the route is low enough, i.e. the load / the number of carriers of the route has fallen below its maximum load / its maximum number of carriers or below a predefined threshold assigned to the route. Alternatively or additionally, the method may comprise, to avoid exceeding the maximum load / the maximum number of carriers for one of the determined off-line routes, splitting the route that has reached its maximum load / its maximum number of carriers into two or more different off-line routes.

For the laboratory sample distribution system and / or the laboratory automation system, the embodiments described above in connection with the method of operating a laboratory sample distribution system may be provided accordingly.

### Description of further embodiments

In the following, embodiments, by way of example, are described with reference to figures. The figures mentioned below show:
- Fig. 1: a graphical representation of a laboratory sample distribution system;
- Fig. 2: a graphical representation of a flow diagram of a method of operating a laboratory sample distribution system;
- Fig. 3A: a graphical representation of an example of the smallest deadlock;
- Fig. 3B: a graphical representation of an example of allowed movements for a carrier at a given plane position / logical field;
- Fig. 3C: a graphical representation of an example of carrier movements at a given plane position / logical field that are not allowed;
- Fig. 3D: a graphical representation of a specific pattern for allowed movements on the transport plane;
- Fig. 4: a graphical representation of a reserved track segment and a subsequent flagged plane position / logical field for a first carrier;
- Fig. 5: a graphical representation of a split route;
- Fig. 6: a first situation that may occur when solving the optimization problem;
- Fig. 7: a second situation that may occur when solving the optimization problem; and
- Fig. 8: a third situation that may occur when solving the optimization problem.

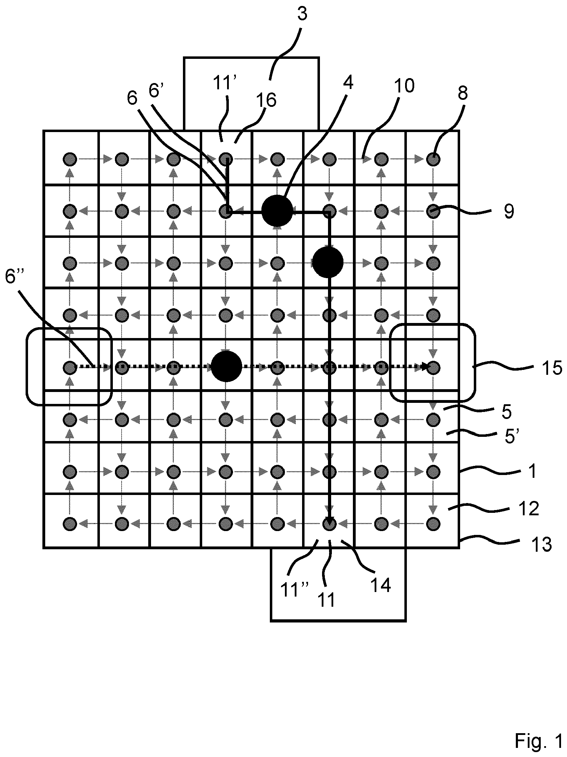

Fig. 1 shows a graphical representation of a laboratory sample distribution system. The laboratory sample distribution system comprises a plurality of carriers 4 configured to carry one or more sample containers containing a sample to be analyzed by laboratory devices 3, a transport plane 1 assigned to the laboratory devices 3 and providing support to the sample container carriers 4, and a driving device 13 configured to move, in response to driving control signals, the plurality of carriers 4 between plane positions 5 provided on the transport plane 1.

The transport plane 1 may comprise a plurality of transport modules 12. The transport plane 1 may comprise a plurality of plane positions / logical fields 5. In the illustrated case, one plane position / logical field 5 defines one plane location 5'. Each transport module 12 can be assigned to a respective plane position / logical field 5. Each laboratory devices 3 may be assigned to one or more specific plane positions / logical fields 5. Fig. 1 also shows a directed graph model 8 of the transport plane 1. The directed graph model 8 comprises a plurality of nodes 9 and a plurality of arcs 10 connecting the nodes 9. Each of the nodes 9 of the directed graph model 8 may correspond to a respective plane location 5'. Alternatively, for a subset of the nodes 9, each node 9 may correspond to a respective plane location 5'. Each of the arcs 9 of the directed graph model 8 may correspond to a movement between two respective plane locations 5'. Alternatively, for a subset of the arcs 9, each arc 9 may correspond to a movement between two respective plane locations 5'.

A certain laboratory device 3 may correspond to certain plane positions 5 / plane locations 5'. One of these plane locations 5' can be a transfer location 16. Each laboratory device 3 may be assigned to one or two transfer locations 16. Carriers 4 being located on a first transfer location 16 assigned to a specific laboratory device can be transferred from this transfer location 16 to the specific device. Alternatively, if carriers 4 with a sample are located on the first transfer location 16 assigned to the specific laboratory device 3, the sample can be transferred from this transfer location 16 to the specific device 3. Carriers 4 being located in the specific device 3 can be transferred to a second transfer location 16 assigned to the specific laboratory device 3. Alternatively, if carriers 4 without a sample are located on the second transfer location 16 assigned to the specific laboratory device 3, a sample can be transferred from the specific device 3 to the carrier 4 on the second transfer location 16. The first and second transfer location 16 may be assigned to the same specific laboratory device 3. The first and second transfer location 16 may correspond to an input and an output of the laboratory device 3 (input plane location / position and output plane location / position). The first and second transfer location 16 may correspond to the same or to different plane locations 5' / plane positions 5 assigned to the specific laboratory device 3. It is noted that only one carrier 4 can be provided on one plane position 5.

Via the transport plane 1, carriers 4 may be moved between different plane locations 5'. In particular, carriers 4 may be moved between pairs of plane locations 11. The movements may correspond to routes 6 for the carriers 4. First plane locations 5' of this routes may be start plane locations and last plane locations 5' of this routes may be destination plane locations and vice versa. Start plane locations and destination plane locations may correspond to endpoint locations and / or pairs of plane locations 11. For each pair of plane locations 11, different routes 6 may be provided. Each pair of plane locations 11 may comprise two plane locations 5, e.g. a start plane location 11' and a destination plane location 11", i.e. two endpoint locations. First frequent endpoint location data indicative of a first selection of plane locations 14 most frequently providing for an endpoint of a route 6 of traveling for the carriers 4 may be determined. This first selection of plane locations 14 may correspond to a first set of pairs of plane locations 11. The first set of pairs of plane locations 11 may correspond to transfer locations 16, in particular to transfer locations 16 frequently visited by carriers. Second frequent endpoint location data indicative of a second selection of plane locations 15 less frequently providing for an endpoint of a route 6 of traveling for the carriers 4 may be determined. This second selection of plane locations 15 may correspond to a second set of pairs of plane locations 11. The second selection 15 may not correspond to transfer locations 16. The second set of pairs of plane locations 11 may not correspond to transfer locations 16. The second set of pairs may comprise pairs 11 that do not correspond to the first selection 14 and / or pairs 11 in which one location of each pair 11 corresponds to the first selection 14 and the other location of each pair 11 corresponds to the second selection 15. The second set of pairs of plane locations 11 may correspond to transfer locations 16 less frequently visited by carriers 4. An alternating sequence of nodes 9 and arcs 10 can form a route 6, wherein the first and the last element is a node 9, these nodes 9 corresponding to a pair of plane locations 11.

Fig. 1 shows four endpoints. The four endpoints may correspond to a selection of plane locations 14, 15. Between these four endpoints more than twelve possible connection routes exist. However, for sake of simplification, Fig. 1 merely shows two routes. Each endpoint can form a pair of plane locations 11 with any of the other endpoints. Accordingly, these four endpoints can define twelve different pairs of plane locations 11 (start-point / end-point pairs). In general, m endpoints can define 2 . *b*(*m*, 2) = *m* · (*m* - 1) different pairs of plane locations 11 (here, b() is the binomial coefficient). However, according to the Fig. 1, two first endpoints 11', 11" correspond to the first selection of plane locations 14 and two other endpoints (second endpoints) correspond to the second selection of plane locations 15. The first endpoints may define a first pair of plane locations. The second endpoints may define a second pair of plane locations. A first traffic corresponding to the first pair of plane locations may be higher than a second traffic corresponding to the second pair of plane locations. Thus, the number of carriers 4 traveling between the first pair of plane locations may be higher than the number of carriers 4 traveling between the second pair of plane locations, e.g. in a given time interval.

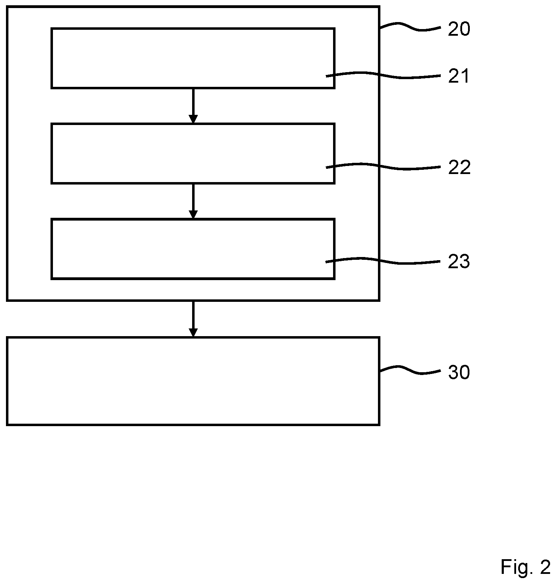

Fig. 2 shows a graphical representation of a flow diagram of a method of operating a laboratory sample distribution system. The method according to Fig. 2 comprises: prior to moving the carriers 4 on the transport plane 1, pre-determining off-line routes on the transport plane 20, e.g. depending on transfer locations, by one or more processors of a data processing device. The pre-determining 20 comprises: determining a model representing the transport plane with plane locations and location-to-location movements between plane locations associated to the plurality of carriers 21. Further, the pre-determining 20 comprises: calculating an optimized set of off-line routes between pairs of plane locations from the plurality of plane locations using the model, the calculating comprising solving an optimization problem in which routes between the pairs of plane locations are simultaneously mutually optimized 22. The pre-determining 20 further comprises: providing the optimized set of off-line routes as off-line routes on the transport plane 23. The method further comprises: controlling the driving device 30 such that the carriers 4 are moved along the pre-determined off-line routes 6 on the transport plane 1.

The pairs of plane locations 11 may comprise the first and second set of pairs of plane locations 11. The pre-determining 20 can comprise two runs, a first and a second pre-determining. In the first pre-determining, routes 6 for the first set of pairs of plane locations 11 may be determined, and in the second pre-determining, routes 6 for the second set of pairs of plane locations 11 may be determined. Alternatively, the calculating of the optimized set of off-line routes 22 can comprise two runs, one for the first and one for the second set of pairs of plane locations 11. In each case, the first run may be prioritized. The first run can be performed prior to the second run. During the second run, the routes determined via the first run may be fixed. In Fig. 1, the first route 6' may be calculated via a first run and the second route 6" may be calculated via a second run.

For example, the calculating of the optimized set of off-line routes 22 can comprise a first run for determining first routes 6, and, independently therefrom, the calculating of the optimized set of off-line routes 22 can comprise a second run for determining second routes 6. Subsequently, the first and second routes 6 can be re-optimized depending on the first and second routes 6 together and / or depending on (all) the pairs of plane locations 11. This subsequent step can correspond to the determining of the optimized set of off-line routes from the plurality of routes 23.

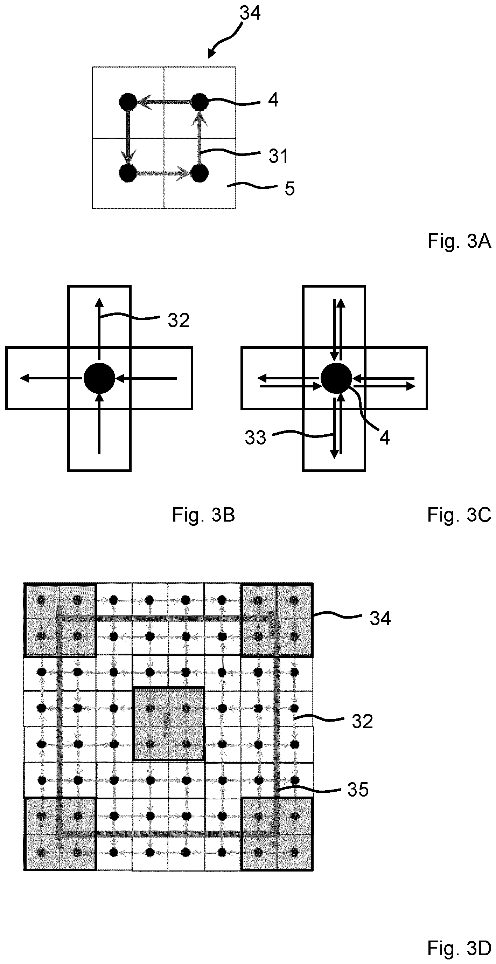

Fig. 3A shows a graphical representation of an example of the smallest deadlock if field-to-field (logical field / plane position) moves are possible for each field in only one X- and one Y-direction. In this case, four plane positions 5 of an area of 2x2 plane positions 5 are occupied by four carriers 4. Thus, each of the four plane positions 5 is occupied by one carrier 4. For each plane position 5, with respect to the area of 2x2 plane positions 5, counterclockwise movements 31 to another plane position of the area of 2x2 plane positions 5 are allowed. Furthermore, for each of the four carriers 4, such a movement is also intended. However, since each of the four plane positions 5 is occupied, none of the four carriers 4 can reserve the following plane position 5 and / or can perform the intended movement. This results in a deadlock. Analogously, although not shown in the Figures, a deadlock can also be constituted by more than four carriers 4 and plane positions 5. In each such case, the carriers 4 of a deadlock may form a closed circle. An adjacency matrix corresponding to blocked carriers and the arc corresponding to the next move 4 may be provided. Through calculation of (finite) powers of the adjacency matrix, it can be determined if blocked carriers 4 form a circle, i.e. if blocked carriers form a deadlock.

Fig. 3B shows a graphical representation of an example of allowed movements 32 for a carrier 4 at a given plane position 5. At the given plane position 5, the carrier 4 may be allowed to move only in one X- and one Y-direction. In Fig. 3B, the embodiment is shown that the carrier 4 is allowed to move in the X-direction left and in the Y-direction up. Fig. 3C, on the other hand, additionally illustrates carrier movements 33 at a given plane position 5 that are not allowed.

Fig. 3D shows a graphical representation of a specific pattern for allowed location-to-location movements 32 on the transport plane 1. In Fig. 3D, the transport plane 1 is divided in quadratic areas of 6x6 plane positions 35. Each area of 6x6 plane positions 35 corresponds to one transport module 12. In the upper half of each quadratic area 35, the carries 4 are allowed to move in the X-direction left, and in the lower half of each quadratic area 35, the carries 4 are allowed to move in the X-direction right (only). In the left half of each quadratic area 35, the carries 4 are allowed to move in the Y-direction down, and in the right half of each quadratic area 35, the carries 4 are allowed to move in the Y-direction up (only). In this pattern, each quadratic area 35 comprises one area of 2x2 plane positions 34 in the center that can result in a deadlock. In this area of 2x2 plane positions 34, clockwise carrier movements are allowed. Moreover, the pattern comprises additional such areas of 2x2 plane positions 34, wherein each plane position 5 of each of the additional such areas of 2x2 plane positions 34 corresponds to a corner position 5 of a quadratic area 35. In Fig. 3D, each such area of 2x2 plane positions 34 (potentially forming a deadlock) is marked with an exclamation mark. The four plane positions involved in this 2x2 plane positions come from the 4 adjacent corners of 4 areas. There is one 6x6 area fully represented and 8 parts of 6x6 areas (only in part represented in Fig. 3D).

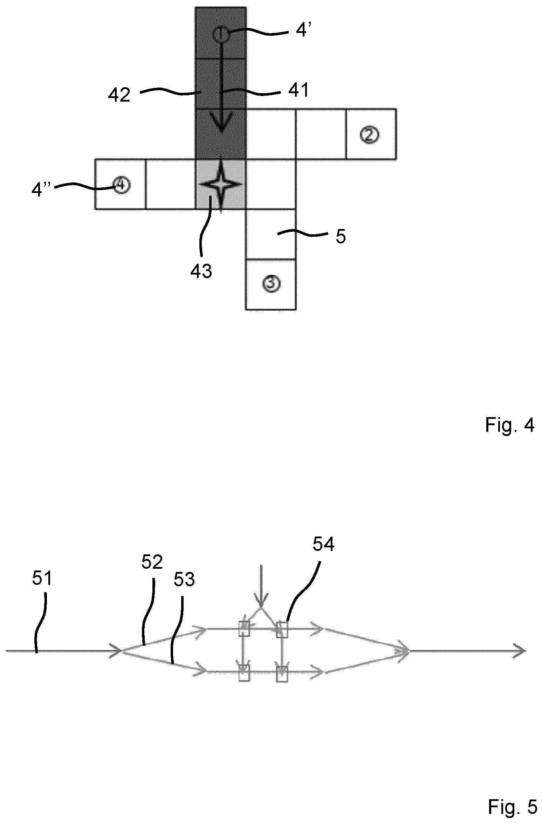

Fig. 4 shows a graphical representation of a reserved track segment 42 and a subsequent flagged plane position 43 for a first carrier 4'. Fig. 4 illustrates a method for preventing deadlocks. The first carrier 4' reserves a track segment 42 of plane position 5 along its route 41. The first plane position 5 of the segment 42 corresponds to the plane position 5 that the first carrier 4' would enter next, starting from its current plane position 5. Starting from the first plane position 5, the track segment 42 comprises of one or more immediately adjacent further plane positions 5 up to a last plane position 5 of the track segment 42. In Fig. 4, the track segment 42 comprises two plane positions 5, i.e. a first and a last. The plane positions 5 of the track segment 42 of the first carrier 4' may be reserved for the first carrier 4', i.e. these plane positions 5 may be blocked for carriers 4 other than the first carrier 4'. The plane position 5 on the route 41 of the first carrier 4' that follows directly after the last field of the segment 42 of the first carrier 4' can be flagged for the first carrier 4'. The flagged plane position 43 of the first carrier 4' may not be reserved by other carriers 4, i.e. the flagged plane position 43 may not be comprised by segments 42 of other carriers 4. In Fig. 4, in particular the fourth carrier 4" is thus not allowed to reserve the next two plane positions to the right of its current position, since it is not allowed to reserve the flagged plane position 43.

Fig. 5 shows a graphical representation of a split route 51. If the traffic of a determined route 51 has a high traffic, e.g. if the traffic exceeds a threshold, the route 51 may be divided in several sub routes 52, 53. In the case of Fig. 5, the route 51 with high traffic is divided in two sub routes 52, 53 (for reducing the congestion potential at a crossing with another route). The sub routes 52, 53 comprise overlapping sections, separating / merging sections and parallel sections. The traffic of the route 51 with high traffic may be divided 50 % to the upper route 52 and 50 % to the lower route 53. Alternatively, the traffic of the route 51 with high traffic may be distributed to the sub routes 52, 53 in a different weighting. For example, the shortest of the sub routes 52, 53 of the split route 51 may be provided with the highest percentage of the traffic. To avoid collisions at the crossings 54 of routes, the carries 4 assigned to the split route 51 may alternatively follow one of the sub routes 52, 53.

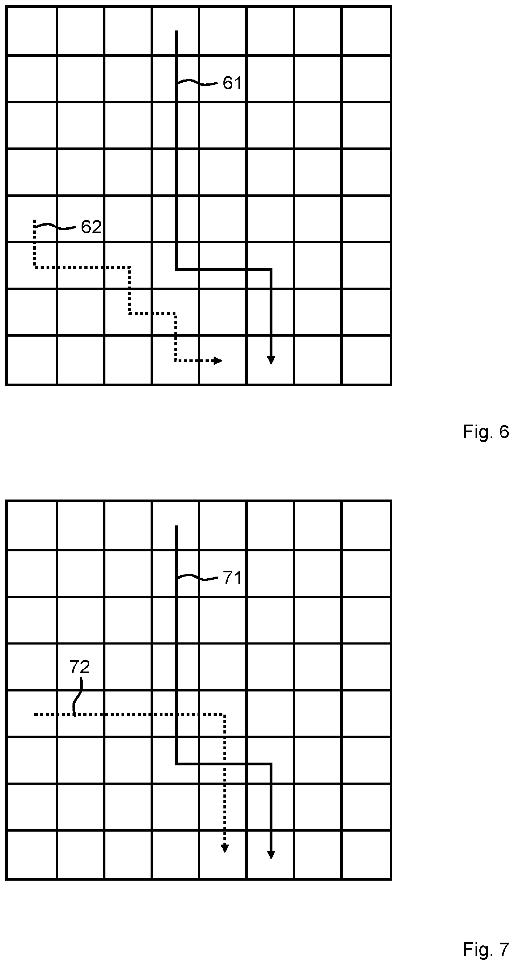

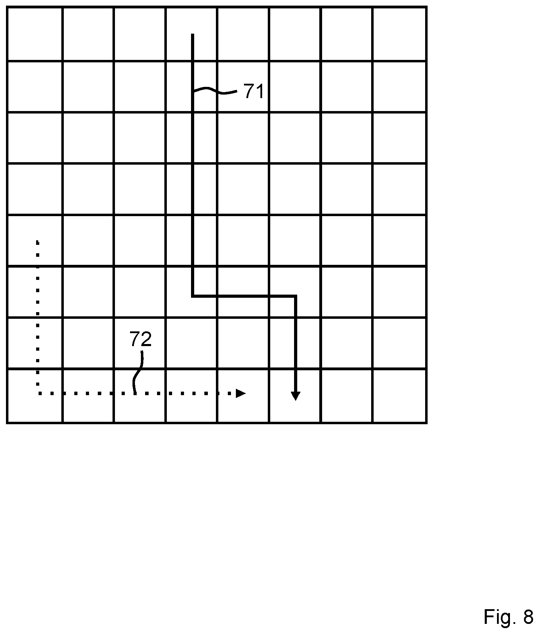

Figs. 6 to 8 show three situations that may occur when solving the optimization problem. The three situations refer to three possibilities of providing two routes connecting two pairs of plane locations. According to the first situation in Fig. 6, the first route 61 connects the first pair of plane locations and the second route 62 connects the second pair of plane locations. According to the second situation in Fig. 7, the additional first route 71 connects the first pair of plane locations and the additional second route 72 connects the second pair of plane locations. According to the third situation in Fig. 8, the further first route 81 connects the first pair of plane locations, and the further second route 82 connects the second pair of plane locations.

The first routes 61, 71, 81 may correspond to higher traffic than the second routes 62, 72, 82. The penalty points of the respective routes can be proportional to the traffic intensity of the respective routes. According to this example, during solving the optimization problem, the following penalty strategy (constraints) may apply. For a route with low traffic intensity, the following applies: (i) route length: 5 penalty points per field (plane location or plane position) used in the route; (ii) route joining: 50 penalty points for route joining another one; (iii) route curve: 2 penalty points for each curve in the route. For a route with high traffic intensity, the following applies: (i) route length: 10 penalty points per field (plane location or plane position) used in the route; (ii) route joining: 100 penalty points for route joining another one; (iii) route curve: 4 penalty points for each curve in the route. In the first situation, the route with higher traffic comprises 10 fields, 0 crossings, and 2 curves. The route with lower traffic comprises 8 fields, 0 crossings, and 5 curves. Hence, according to the first situation, the route with higher traffic is related to 108 penalty points and the route with lower traffic is related to 50 penalty points. Thus, the first situation is related to 158 penalty points. In the second situation, the route with higher traffic comprises 10 fields, 2 crossings, and 2 curves. The route with lower traffic comprises 8 fields, 2 crossings, and 1 curve. Hence, according to the second situation, the route with higher traffic is related to 308 penalty points and the route with lower traffic is related to 142 penalty points. Thus, the second situation is related to 450 penalty points. The second situation is related to more penalty points than the first situation. In the third situation, the route with higher traffic comprises 10 fields, 0 crossings, and 1 curve. The route with lower traffic comprises 8 fields, 0 crossings, and 1 curve. Therefore, according to the third situation, the route with higher traffic is related to 104 penalty points and the route with lower traffic is related to 42 penalty points. Hence, the third situation is related to 148 penalty points. Thus, when solving the optimization problem, the first situation is preferred over the second situation and the third situation is preferred over both the first and the second situation.

## Claims

1. Method of operating a laboratory sample distribution system, wherein the laboratory sample distribution system comprises:
- a plurality of carriers (4) configured to carry one or more sample containers containing a sample to be analyzed by laboratory devices (3);
- a transport plane (1) assigned to the laboratory devices (3) and providing support to the plurality of carriers (4); and
- a driving device (13) configured to move, in response to driving control signals, the plurality of carriers (4) between plane positions (5) provided on the transport plane (1);
the method comprising:
- prior to moving the carriers (4) on the transport plane (1), pre-determining off-line routes (6) on the transport plane (1) by one or more processors of a data processing device, the pre-determining comprising:
- determining a model representing the transport plane (1) with plane locations (5') and location-to-location movements between plane locations (5') associated to the plurality of carriers (4)
- calculating an optimized set of off-line routes between pairs of plane locations from the plurality of plane locations (5') using the model, the calculating comprising solving an optimization problem in which routes between the pairs of plane locations are simultaneously optimized; and
- providing the optimized set of off-line routes as off-line routes (6) on the transport plane (1); and
- controlling the driving device (13) such that the carriers (4) are moved along the pre-determined off-line routes (6) on the transport plane (1).

2. Method of claim 1, wherein the model is a directed graph model (8) of the transport plane (1), wherein nodes (9) of the directed graph model (8) are assigned plane locations (5') and arcs (10) connecting the nodes (9) of the directed graph model (8) are assigned location-to-location movements between two plane locations (5').

3. Method of claim 1 or 2, wherein the optimization problem is one of the following:
- a multi-commodity flow problem, in particular a multi-commodity flow problem in a directed graph;
- a shortest path problem; and
- a minimum flow problem.

4. Method of at least one of the preceding claims, wherein the optimization problem is solved by applying a MIP-solver.

5. Method of claim 2, further comprising, in the data processing device,
- providing first frequent endpoint location data indicative of a first selection of plane locations (14) most frequently providing for an endpoint of a route of traveling for the carriers (4); and
- determining the directed graph model (8) of the transport plane (1), wherein first nodes (9) of the directed graph model (8) are assigned the plane locations (5') from the first selection of plane locations (14) and first arcs (10) starting and / or ending at the first nodes (9) of the directed graph model (8) are assigned location-to-location movements from and / or to plane locations (5') from the first selection of plane locations (14).

6. Method of claim 2 or 5, further comprising, in the data processing device,
- providing second frequent endpoint location data indicative of a second selection of plane locations (15) less frequently providing for an endpoint of a route (6) of traveling for the carriers (4), wherein the second selection of plane locations (15) is different from the first selection of plane locations (14); and
- determining the directed graph model (8) of the transport plane (1), wherein second nodes (9) of the directed graph model (8) are assigned the plane locations (5') from the second selection of plane locations (15) and second arcs (10) starting and / or ending at the second nodes (9) of the directed graph model (8) are assigned location-to-location movements from and / or to plane locations (5') from the second selection of plane locations (15).

7. Method of at least one of the preceding claims, further comprising, in the data processing device,
- providing traffic data indicative of a predicted number of carriers (4) travelling between the pairs of plane locations (11) in a time interval; and
- calculating the optimized set of off-line routes between pairs of plane locations from the plurality of plane locations (5') in dependence on the predicted number of carriers (4) travelling between the pairs of plane locations (11) in the time interval.

8. Method of claim 7, wherein the providing traffic data further comprises at least one of:
- providing traffic data determined from a sample order listing;
- providing traffic data determined from historical data indicative of historical operation of the laboratory sample distribution system;
- providing traffic data determined from workflow data indicative of a workflow for the one or more sample containers to be carried by the carriers (4);
- providing traffic data determined from a measured current and / or recent number of carriers (4) transported; and
- providing traffic data determined from a simulation.

9. Method of at least one of the preceding claims, the controlling of the driving device (13) further comprising:
- in the driving device (13), receiving a reservation request from a carrier (4) traveling on a selected off-line route (6) from the pre-determined off-line routes (6) and being located on a present route location along the selected off-line route (6), the reservation request indicating a request for reserving a following route location along the selected off-line route (6);
- verifying whether the following route location is free for travelling by the driving device (13); and
- moving the carrier (4) from the present route location to the following route location along the selected off-line route (6), if it is verified by the driving device (13) that the following route location is free for travelling.

10. Method of at least one of the preceding claims, wherein the calculating of the optimized set of off-line routes between pairs of plane locations from the plurality of plane locations (5') via solving the optimization problem further comprises applying at least one constraint selected from the following group:
- minimizing a route length of each of the off-line routes;
- minimizing a weighted route length of each of the off-line routes;
- minimizing a number of route curves for each of the off-line routes;
- minimizing a number of off-line routes joining and / or crossing another off-line route;
- uniformly distributing carrier traffic per plane location (5');
- limiting location-to-location movements between two plane locations (5') to movement between adjacent plane locations only;
- exclude plane locations (5') reserved for carrier queuing;
- uniformly distributing predicted wear of plane locations over the plane locations (5') of the transport plane (1);
- minimizing the energy consumption of the laboratory sample distribution system; and
- minimizing / avoiding areas of 2x2 plane positions with four crossings.

11. Method of at least one of the preceding claims, wherein the pre-determining of off-line routes (20) further comprises, in the data processing device,
- receiving first route traffic information indicative of high carrier traffic for a first off-line route (51); and
- splitting the first off-line route (51) into two or more different off-line routes (52, 53).

12. Method of at least one of the preceding claims, wherein the pre-determining of off-line routes (20) further comprises, in the data processing device,
- receiving second route traffic information indicative of high carrier traffic for a second off-line route; and
- preventing the second off-line route from route adjustment while determining the plurality of off-line routes and / or determining optimized set of off-line routes.

13. Method of at least one of the preceding claims, wherein the calculating of the optimized set of off-line routes between pairs of plane locations from the plurality of plane locations (5') using the model further comprises, in the data processing device,
- receiving first carrier traffic information indicative of a first carrier traffic scenario for the plurality of off-line routes (6);
- determining a first plurality of off-line routes (6) between the pairs of plane locations (11) from the plurality of plane locations (5');
- receiving second carrier traffic information indicative of a second carrier traffic scenario for the plurality off-line routes (6), wherein the second carrier traffic scenario is different from the first carrier traffic scenario; and
- determining a second plurality of off-line routes (6) between the pairs of plane locations (11) from the plurality of plane locations (5').

14. Method of at least one of the preceding claims, the controlling of the driving device (13) further comprises:
- operating the laboratory sample distribution system at run-time; and
- selecting an off-line route (6) from the optimized set of off-line routes (6), if it is determined that a runtime route cannot be determined for a carrier (4) at run-time.

15. Method of at least one of the preceding claims, wherein:
- the pre-determining of off-line routes further comprises:
- determining a first optimized set of off-line routes (6);
- assigning the first optimized set of off-line routes (6) a first application parameter;
- determining a second optimized set of off-line routes (6) which is different from the first optimized set of off-line routes (6); and
- assigning the second optimized set of off-line routes (6) a second application parameter; and
- the controlling of the driving device further comprises:
- receiving application information indicative of a current application parameter; and
- selecting one of the first optimized set of off-line routes and the second optimized set of off-line routes for controlling the driving device (13), if it is determined that the current application parameter matches the first application parameter or the second application parameter.

16. A laboratory sample distribution system, comprising:
- a plurality of carriers (4) configured to carry one or more sample containers containing a sample to be analyzed by laboratory stations (3);
- a transport plane (1) assigned to the laboratory devices (3) and providing support to the plurality of carriers (4); and
- a driving device (13) configured to move, in response to driving control signals, the plurality of carriers (4) between plane positions (5) provided on the transport plane (1); and
configured to:
- prior to moving the carriers on the transport plane, pre-determine off-line routes (6) on the transport plane (1) by one or more processors of a data processing device, comprising:
- determining a model representing the transport plane (1) with plane locations (5') and location-to-location movements between plane locations (5') associated to the plurality of carriers (4);
- calculating an optimized set of off-line routes between pairs of plane locations from the plurality of plane locations (5') using the model, the calculating comprising solving an optimization problem in which routes between the pairs of plane locations are simultaneously optimized; and
- providing the optimized set of off-line routes as off-line routes (6) on the transport plane (1); and
- control the driving device (13) such that the carriers (4) are moved along the pre-determined off-line routes (6) on the transport plane (1).

17. A laboratory automation system, comprising a laboratory sample distribution system of claim 16 and a plurality of laboratory devices (3).

18. The laboratory automation system of claim 17, wherein the plurality of laboratory devices (3) comprises one or more laboratory devices selected from the following: laboratory device for pre-analytics; laboratory device for sample analysis; and laboratory device for post-analytics.
